# EUROPEAN PATENT SPECIFICATION

(11) **EP 3 762 544 B1**
(45) Date of publication and mention of the grant of the patent: **30.03.2022**
(21) Application number: 19708093.0
(22) Date of filing: 27.02.2019
(51) Int. Cl.: E01C 23/16, E01C 23/22

(54) **AUTOMATIC ROAD MARKING SYSTEM**
AUTOMATISCHES STRASSENMARKIERUNGSSYSTEM
SYSTÈME DE MARQUAGE ROUTIER AUTOMATIQUE

(30) Priority: 08.03.2018 IT 201800003365
(43) Date of publication of application: 13.01.2021
(73) Proprietor: Molinari, Cinzia, 06035 Gualdo Cattaneo (PG) (IT); Falchetti, Gianni, 06035 Gualdo Cattaneo (PG) (IT)
(72) Inventor: FALCHETTI, Gianni, 06035 GUALDO CATTANEO (PG) (IT)
(74) Representative: Cutropia, Gianluigi
(86) International application number: PCT/EP2019/054819
(87) International publication number: WO 2019/170487

(56) References cited:
- CN-A- 107 542 030
- US-A1- 2004 160 595
- US-A1- 2016 209 511
- US-B1- 9 702 830

## Description

The present invention relates to an automatic road marking system.

As it is known, roads are generally provided with road markings, consisting in suitably colored lines that are marked on the road surface in such a way to be distinguished from the road surface.

Various types of road markings machines are known on the market. Such types of systems, which are commonly known as road marking machines, comprise a tank with paint for road markings and spray nozzles connected to the tank by means of a hydraulic system in order to spray the paint on the road surface and make the road markings.

In order to make the road markings, it is firstly necessary to mark the position where the road markings are to be made, eventually masking the road with adhesive tape that needs to be glued on the asphalt. Afterwards, the operator drives the road marking machine, placing the spray nozzle in the position shown by the masking tape where the road markings are to be made.

In case of new road markings, the user needs to measure the road in order to exactly identify the position where the road markings are to be made.

It appears evident that the systems of the prior art that are used to make roads markings are time-consuming and complicated, requiring the presence of several operators to measure the road, apply the masking tape and make the road markings as indicated.

Moreover, given the fact that many operations are carried out by the operator, it appears evident that the traditional processes are inaccurate and unreliable because of possible human errors.

CN107542030 discloses a road marking system with a control vehicle and work vehicles travelling behind it. The control vehicle includes communication modules for wireless transmission. It further includes a paint tank to deliver the work vehicles by corresponding conduits. The work vehicles include automatic steering systems, a GPS module and spray nozzles supplied with paint from the tank of the control vehicle. Specific control and receiver modules allow the steering of the work vehicles based on data transmitted from the control vehicle.

The purpose of the present invention is to eliminate the drawbacks of the prior art by disclosing an automatic road marking system capable of minimizing the use of operators.

Another purpose of the present invention is to provide such a road marking system that is accurate, reliable, rapid and easy to use.

These purposes are achieved according to the invention with the characteristics of the independent claim 1.

Advantageous embodiments of the invention appear from the dependent claims.

The system of the invention is defined in claim 1. Claim 8 defines a method for the automatic making of road markings with a system according to claim 1.

The advantages of the system according to the invention are evident. In fact, the use of such a system only requires the presence of one operator to drive the pilot vehicle. All road marking operations are automatically made by the automatic guided vehicle (AGV). Therefore, the operator in charge of driving the pilot vehicle does not need to be accurate because the AGV moves autonomously and precisely, placing itself in the correct position to make the road markings.

Additional features of the invention will appear manifest from the detailed description below, which refers to a merely illustrative, not limiting embodiment, as illustrated in the attached figures, wherein:

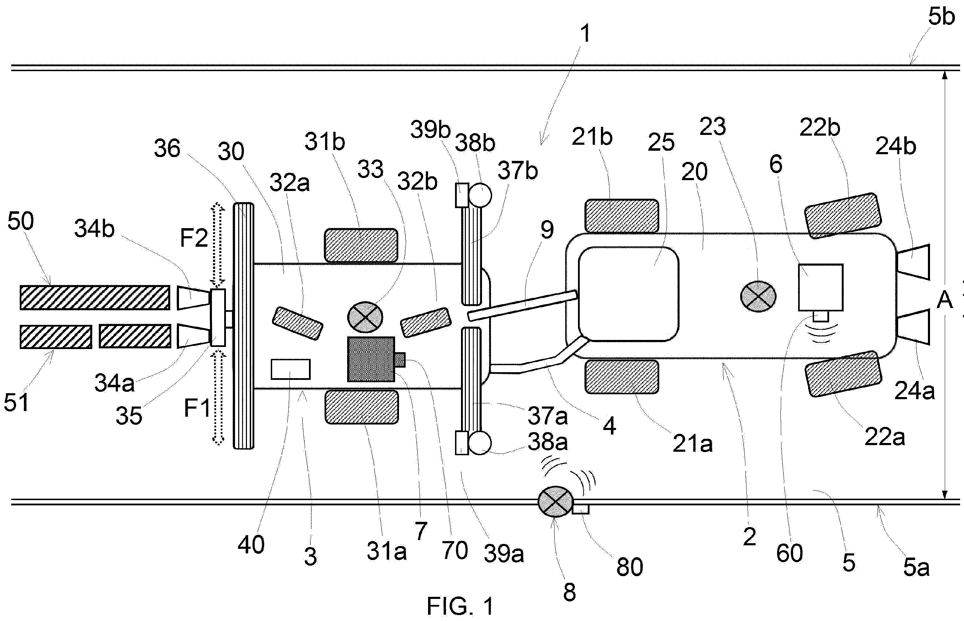

Fig.1 is a diagrammatic top view of the road marking system according to the invention.

With reference to the Figure, the system according to the invention is disclosed, which is generally indicated with reference numeral (1).

The Figure shows a road surface (5) of a carriageway with two lateral edges (5a, 5b). Road markings are to be made on the road surface (5), consisting for example in a solid line (50) and a broken line (51).

The system (1) comprises a pilot vehicle (2) and an automatic guided vehicle (AGV) (3).

The pilot vehicle (2) is driven by a pilot and is suitable for traveling along the road surface (5) of the carriageway. The pilot vehicle comprises a body (20) supported by driving wheels (21a, 21b) and steering wheels (22a, 22b). Obviously, also the steering wheels (22a, 22b) can be driving wheels. The pilot vehicle can be provided with an internal combustion or electric engine to actuate the driving wheels.

A first GPS module (23) suitable for detecting the position of the pilot vehicle is mounted in the body (20) of the pilot vehicle.

Cameras are mounted in a front part of the body (20) and directed frontally in order to take images of the entire width (A) of the carriageway of the road surface (5). Two cameras (24a, 24b) can be provided and respectively disposed on the right and on the left relative to the forward traveling direction of the pilot vehicle.

The pilot vehicle (2) comprises a control unit (6) connected to the first GPS module (23) and to the cameras (24a, 24b) to receive data on the position of the vehicle detected by the first GPS module (23) and on the images taken by the cameras (24a, 24b),

A wireless transmitter (60) is connected to the control unit (6) to transmit the data received from the control unit.

A tank (25) is mounted in a back portion of the body (20) of the pilot vehicle. The tank (25) is suitable for being filled with road marking paint.

The AGV (3) does not need to be driven by a pilot. The AGV (3) comprises a body (30) supported by driving wheels (31a, 31b) and swiveling wheels (22a, 22b) in such a way to curve in any direction. The AGV comprises an electric motor connected to the driving wheels and a steering system. An electronic control unit (ECU) (7) controls the motor and the steering system of the AGV, in such a way to move the AGV in the desired direction without requiring the presence of a pilot.

Although, for clarity reasons, the AGV (3) shown in the figures is slightly shorter than the pilot vehicle (2), it must be considered that the AGV is much shorter and much smaller than the pilot vehicle because of the fact that it does not need to be driven by a pilot and it is not provided with a paint tank. In view of the above, the AGV is easy to handle and can easily move and curve along the carriageway of the road surface (5).

A second GPS module (33) suitable for detecting the position of the AGV is mounted in the body (30) of the AGV.

Spray nozzles (34a, 34b) are mounted in a back part of the AGV and hydraulically connected to the tank (25) of the pilot vehicle. A flexible conduit (4) puts the tank (25) of the pilot vehicle in communication with a hydraulic system (40) provided in the AGV and connected to the spray nozzles (34a, 34b).

A coupling (9) is connected to a back portion of the pilot vehicle and to a front portion of the AGV in order to prevent the risk of moving the pilot vehicle away from the AGV, pulling the flexible conduit (4) and damaging it.

The hydraulic system (40) comprises one or more pumps suitable for extracting the paint from the tank (25) and sending it to the spray nozzles (34a, 34b).

The spray nozzles (34a, 34b) are supported by a trolley (35) that is slidingly mounted in a guide (36) disposed in the back portion of the body (30) of the AGV, in transverse direction relative to the forward traveling direction of the system (1). The trolley (35) is moved along the guide (36) by means of actuators, such as for example cylinder-piston systems, motorized systems with rack, worm, belt and the like.

In view of the above, the spray nozzles (34a, 34b) can be moved in the directions of the arrows (F1, F2) according to the road marking requirements.

Although two spray nozzles (34a, 3b) mounted on a single trolley (35) are shown in the figures, each spray nozzle can be mounted on a trolley.

Optical sensors (38a, 38b) are mounted in the AGV and directed towards the road surface (5) of the carriageway in order to detect the presence of existing road markings.

Proximity sensors (39a, 39b) are mounted in the AVG and directed towards the road surface (5) of the carriageway in order to detect the presence of obstacles, such as stones, poles and the like, on the road surface or on the edges of the carriageway.

Advantageously, two supporting arms (37a, 37b) project laterally rightwards and leftwards from a front portion of the body (30) of the AGV. The optical sensors (38a, 38b) and the proximity sensors (39a, 39b) are mounted on the supporting arms (37a, 37b).

In addition to being connected to the motor and to the steering system of the AGV, the electronic control unit (ECU) (7) of the AGV is also connected to the second GPS module (33), to the hydraulic system (40), to the actuators of the trolley (35) of the spray nozzles, to the optical sensors (38a, 38b) and to the proximity sensors (39a, 39b).

A receiver (70) is connected to the ECU (7) of the AGV to receive data from the transmitter (60) of the control unit of the pilot vehicle.

The system (1) comprises a third GPS module (8) suitable for being disposed on an edge (5a) of the road surface of the carriageway in order to detect a fixed reference position. The third GPS module (8) has a transmitter (80) coupled with the control unit (6) of the pilot vehicle and with the ECU (7) of the AGV in order to transmit data on the fixed position to the control unit (6) of the pilot vehicle and to the ECU (7) of the AGV.

The operation of the system (1) of the invention is described below.

A mapping of the road is necessary before making new roads markings on the road surface (5). Such mapping is made only by the pilot vehicle (2) without needing the AGV.

The third GPS module (8) is disposed in a fixed position, for example on an edge (5a) of the road surface in order to have a fixed reference position.

The AGV is detached from the pilot vehicle, disconnecting the coupling (9) and the flexible conduit (4). Therefore, only the pilot vehicle (2) travels on the carriageway of the road surface (5) in order to map a section of the carriageway. Said mapping is made by storing the width (A) of the carriageway in the control unit (6) of the pilot vehicle, as well as various distances between the third GPS module (8), which is fixed, and the first GPS module (23), which moves along with the pilot vehicle.

To that end, the control unit (6) is provided with a mapping software of known type, which is not illustrated in detail, which detects the width of the carriageway (A) from the images of the cameras (24a, 24b) and the distance between the third GPS module (8) and the first GPS module (23) during the forward traveling of the pilot vehicle.

After completing the mapping of a road section, the mapping data is transferred from the control unit (6) of the pilot vehicle to the ECU (7) of the AGV. The pilot vehicle (2) returns to the beginning of the mapped road section, and the AGV is fixed to the pilot vehicle (2), connecting the coupling (9) and the flexible conduit (4).

Now, given the fact that the ECU (7) of the AGV has acquired the mapping of the road, the AGV is completely autonomous and can autonomously move (without being pulled by the pilot vehicle) to make the road markings on the road surface (5) of the carriageway. It must be considered that the connection between the pilot vehicle and the AGV is only necessary to supply the paint from the tank (25) of the pilot vehicle because the AGV is small and has no space for a paint tank.

The ECU (7) of the AGV receives data on a fixed reference point from the third GPS module (8) and data from the second GPS module (33) that indicates the position of the AGV relative to the fixed reference point. In view of the above, the ECU knows the position of the AGV in real time and can guide the AGV to the position where the road marking is to be made. Moreover, the ECU moves the trolley (35) that supports the spray nozzles (34a, 34b) in such a way to place the spray nozzles exactly in the position where the road markings are to be made.

It must be noted that the guide (36) whereon the trolley (35) with the spray nozzles slides protrudes laterally relative to the body (30) of the AGV. Therefore, during the forward travel of the AGV, such a guide (36) may hit an obstacle that is found on the road surface of the carriageway. Such a problem is solved by the proximity sensors (39a, 39b) that detect the presence of obstacles on the carriageway. Accordingly, the AGV is steered by the ECU in order to avoid the detected obstacles.

The road mapping is not necessary when going over the existing road markings of the road surface (5). In such a case, the optical sensors (38a, 3b) of the AGV detect the presence of the existing road markings on the road surface. The third GPS module (8) and the second GPS module (33) send data to the ECU (7) on the position of the AGV relative to the fixed reference point of the third GPS module. Therefore, the ECU controls the actuation of the spray nozzles (34a, 34b) in such a way to go over the existing road markings.

It must be noted that the optical sensors (38a, 38b) are capable of detecting broken lines (51) where the presence of paint is alternated with the lack of paint. In such a case, the spray nozzle used to go over the broken line is actuated intermittently, according to the detection made by the optical sensors. In view of the above, the paint is sprayed only on the painted portion and not on the unpainted portion of the broken line.

Numerous equivalent variations and modifications can be made to the present embodiment of the invention, which are within the reach of an expert of the field and fall in any case within the scope of the invention as disclosed by the attached claims.

## Claims

1. Automatic road marking system (1), comprising a pilot vehicle (2) and an automatic guided vehicle AGV (3); said pilot vehicle (2) comprising:
- a first GPS module (23) suitable for detecting the position of the pilot vehicle,
- cameras (24a, 24b) directed towards the front in such way to take images of a width (A) of a carriageway of a road surface (5),
- a control unit (6) connected to the first GPS module (23) and to the cameras (24a, 24b) to receive data on the position of the vehicle detected by the first GPS module (23) and on the images taken by the cameras (24a, 24b),
- a wireless transmitter (60) connected to the control unit (6) to transmit the data received from the control unit, and
- a tank (25) suitable for being filled with road marking paint said AGV (3) comprising:
- a motor and a steering system,
- a second GPS module (33) suitable for detecting the position of the AGV,
- spray nozzles (34a, 34b) suitable for spraying road marking paint on the road surface;
- a hydraulic circuit (40) hydraulically connected to the spray nozzles (34a, 34b) and to the tank (25) of the pilot vehicle to supply the paint from the tank to the spray nozzle, and
- an electronic control unit ECU (7) connected to the motor, to the steering system of the AGV, to the second GPS module (33) and to the hydraulic system (40), and
- a receiver (70) connected to the ECU (7) of the AGV and coupled to the transmitter (60) of the control unit of the pilot vehicle in order to receive data from the transmitter (60) of the control unit of the pilot vehicle;
said system (1) also comprising:
- a third GPS module (8) suitable for being disposed in a fixed position in the proximity of the carriageway or in the carriageway where the road markings are to be made; and
- a wireless transmitter (80) connected to said third GPS module (8) and coupled with said control unit (6) of the pilot vehicle and with said ECU of the AGV to transmit data to the control unit (6) of the pilot vehicle and to the ECU of the AGV, indicating the fixed position wherein the third GPS module is disposed.

2. The system (1) of claim 1, wherein said system (1) also comprises:
- a flexible conduit (4) that puts the tank (25) of the pilot vehicle in communication with the hydraulic system (40) of the AGV, and
- a coupling (9) connected to a back portion of the pilot vehicle (2) and to a front portion of the AGV (3).

3. The system (1) of claim 1 or 2, wherein said AGV (3) comprises:
- a guide (36),
- at least one trolley (35) supporting said spray nozzles (34a, 34b); said trolley (35) being slidingly mounted in said guide (36), and
- actuators suitable for moving the trolley (35) along said guide (36), said actuators being connected to and controlled by said ECU (7) of the AGV.

4. The system (1) of any one of the preceding claims, wherein said AGV (3) comprises optical sensors (38a, 38b) directed towards the road surface (5) of the carriageway to detect the presence of existing road markings; said optical sensors (38a, 38b) being connected to the ECU of the AGV.

5. The system (1) of any one of the preceding claims, wherein said AGV (3) comprises proximity sensors (39a, 39b) directed towards the road surface (5) of the carriageway in order to detect the presence of obstacles on the road surface; said proximity sensors (39a, 39b) being connected to the ECU of the AGV.

6. The system (1) of claim 4 or 5, wherein said AGV (3) comprises two supporting arms (37a, 37b) that project laterally rightwards and leftwards from a front portion of the AGV to support said optical sensors (38a, 38b) and/or said proximity sensors (39a, 39b).

7. The system (1) of any one of the preceding claims, wherein said control unit (6) of the pilot vehicle contains a mapping software suitable for mapping the road surface according to the images taken by said cameras (24a, 24b) and to the position data detected by said first GPS module (23) disposed in the pilot vehicle and by said third GPS module (8) disposed in a fixed position in the proximity of the carriageway or in the carriageway.

8. Method for the automatic making of road markings, with a system (1) according to any one of the preceding claims, comprising the following steps:
- disposing the third GPS module (8) in a fixed position in the proximity of the carriageway or on the road surface of the carriageway where the road markings are to be made;
- mapping a section of the carriageway by means of said pilot vehicle and storing mapping data in said control unit (6) of the pilot vehicle,
- transferring the mapping data of the control unit (6) of the pilot vehicle to the ECU (7) of the AGV,
- moving the AGV to a position where the road markings are to be made and spraying the paint by means of the spray nozzles (34a, 34b) of the AGV in the position where the road markings are to be made.

## Patentansprüche

1. Automatisches Straßenmarkierungssystem (1), umfassend ein Lotsenfahrzeug (2) und ein fahrerloses Transportfahrzeug (FTF) (3);
wobei das Lotsenfahrzeug (2) umfasst:
- ein erstes GPS-Modul (23), das geeignet ist, die Position des Lotsenfahrzeugs zu erfassen,
- Kameras (24a, 24b), die nach vorn gerichtet sind, um Bilder einer Breite (A) einer Fahrbahn auf einer Straßenoberfläche (5) aufzunehmen,
- eine Steuereinheit (6), die mit dem ersten GPS-Modul (23) und den Kameras (24a, 24b) verbunden ist, um Daten über die Position des von dem ersten GPS-Modul (23) erfassten Fahrzeugs und über die von den Kameras (24a, 24b) aufgenommenen Bilder zu empfangen,
- einen Funksender (60), der mit der Steuereinheit (6) verbunden ist, um die von der Steuereinheit empfangenen Daten zu übertragen, und
- einen Tank (25), der geeignet ist, um mit Straßenmarkierungsfarbe befüllt zu werden;
wobei das FTF (3) umfasst:
- einen Motor und ein Lenksystem,
- ein zweites GPS-Modul (33), das geeignet ist, die Position des FTF zu erfassen,
- Spritzdüsen (34a, 34b), die geeignet sind, die Straßenmarkierungsfarbe auf die Straßenoberfläche zu sprühen,
- einen Hydraulikkreislauf (40), der mit den Spritzdüsen (34a, 34b) und dem Tank (25) des Lotsenfahrzeugs hydraulisch verbunden ist, um den Spritzdüsen die Farbe aus dem Tank zuzuführen, und
- eine elektronische Steuereinheit (ECU) (7), die mit dem Motor, dem Lenksystem des FTF, dem zweiten GPS-Modul (33) und dem Hydraulikkreislauf (40) verbunden ist, und
- einen Empfänger (70), der mit der ECU (7) des FTF verbunden und mit dem Funksender (60) der Steuereinheit des Lotsenfahrzeugs gekoppelt ist, um Daten vom Funksender (60) der Steuereinheit des Lotsenfahrzeugs zu empfangen; wobei das System (1) ferner umfasst:
- ein drittes GPS-Modul (8), das geeignet ist, in einer festen Position nahe oder auf der Fahrbahn angeordnet zu werden, die mit der Straßenmarkierung versehen werden soll; und
- einen Funksender (80), der mit dem dritten GPS-Modul (8) verbunden und mit der Steuereinheit (6) des Lotsenfahrzeugs und der ECU des FTF gekoppelt ist, um Daten über die feste Position, an der das dritte GPS-Modul angeordnet ist, an die Steuereinheit (6) des Lotsenfahrzeugs und an die ECU zu übertragen.

2. System (1) nach Anspruch 1, wobei das System (1) ferner umfasst:
- eine flexible Leitung (4), die den Tank (25) des Lotsenfahrzeugs mit dem Hydraulikkreislauf (40) des FTF in Verbindung setzt, und
- eine Kupplung (9), die an einem hinteren Abschnitt des Lotsenfahrzeugs (2) und einem vorderen Abschnitt des FTF (3) angeschlossen ist.

3. System (1) nach Anspruch 1 oder 2, wobei das FTF (3) umfasst:
- eine Führung (36),
- mindestens einen Transportwagen (35), der die Spritzdüsen (34a, 34b) trägt; wobei der Transportwagen (35) verschiebbar in der Führung (36) gelagert ist, und
- Aktuatoren, die geeignet sind, den Transportwagen (35) entlang der Führung (36) zu bewegen; wobei die Aktuatoren mit der ECU (7) des FTF verbunden und von ihr gesteuert sind.

4. System (1) nach einem der vorstehenden Ansprüche, wobei das FTF (3) optische Sensoren (38a, 38b) umfasst, die zur Straßenoberfläche (5) der Fahrbahn gerichtet sind, um bereits vorhandene Straßenmarkierungen zu erfassen; wobei die optischen Sensoren (38a, 38b) mit der ECU des FTF verbunden sind.

5. System (1) nach einem der vorstehenden Ansprüche, wobei das FTF (3) Näherungssensoren (39a, 38b) umfasst, die zur Straßenoberfläche (5) der Fahrbahn gerichtet sind, um das Vorhandensein von Hindernissen auf der Fahrbahn zu erfassen; wobei die Näherungssensoren (39a, 38b) mit der ECU des FTF verbunden sind.

6. System (1) nach Anspruch 4 oder 5, wobei das FTF (3) zwei Trägerarme (37a, 37b) umfasst, die seitlich nach rechts und nach links aus einem vorderen Abschnitt des FTF vorstehen, um die optischen Sensoren (38a, 38b) und/oder die Näherungssensoren (39a, 39b) zu tragen.

7. System (1) nach einem der vorstehenden Ansprüche, wobei die Steuereinheit (6) des Lotsenfahrzeugs eine Mapping-Software enthält, die geeignet ist, eine Kartierung der Fahrbahn auf der Grundlage der von den Kameras (24a, 24b) aufgenommenen Bilder und der von dem ersten, im Lotsenfahrzeug angeordneten GPS-Modul (23) und von dem in einer festen Position nahe oder auf der Fahrbahn angeordneten dritten GPS-Modul (8) erfassten Positionsdaten vorzunehmen.

8. Verfahren zur automatischen Straßenmarkierung mit einem System (1) nach einem der vorstehenden Ansprüche; umfassend die folgenden Schritte:
- Anordnen des dritten GPS-Moduls (8) in einer festen Position nahe oder auf der Fahrbahn, auf der die Straßenmarkierung vorgenommen werden soll;
- Kartieren eines Fahrbahnabschnitts mittels des Lotsenfahrzeugs und Speichern der Kartierungsdaten in der Steuereinheit (6) des Lotsenfahrzeugs,
- Übertragen des Kartierungsdaten der Steuereinheit (6) des Lotsenfahrzeugs an die ECU (7) des FTF,
- Bewegen des FTF in eine Position, in der die Straßenmarkierung vorgenommen werden soll und Aufsprühen von Farbe mittels der Spritzdüsen (34a, 34b) des FTF in der Position, in der die Straßenmarkierung ausgeführt werden soll.

## Revendications

1. Système de marquage des routes horizontal automatique retroréfléchissant (1), comprenant un véhicule pilote (2) et un véhicule à pilote automatique (VPA) (3) ;
ledit véhicule pilote (2) comprenant :
- un premier module GPS (23) apte à détecter la position du véhicule pilote,
- des caméras (24a, 24b) orientées antérieurement de manière à filmer des images de l'ampleur (A) d'une chaussée de la surface routière (5),
- une unité de commande (6) connectée au premier module GPS (23) et aux caméras (24a, 24b) pour recevoir les données relatives à la position du véhicule détectée par le premier module GPS (23) et par les images filmées par les caméras (24a, 24b),
- un émetteur (60) du type sans fil connecté à l'unité de commande (6) pour transmettre les données reçues depuis l'unité de commande, et
- un réservoir (25) apte à être rempli avec une peinture adaptée au marquage des routes ;
ledit VPA (3) comprenant :
- un moteur et un système de direction,
- un deuxième module GPS (33) apte à détecter la position du VPA,
- des gicleurs (34a, 34b) aptes à gicler de la peinture sur la chaussée pour réaliser le marquage de la route,
- un circuit hydraulique (40) connecté hydrauliquement aux gicleurs (34a, 34b) et au réservoir (25) du véhicule pilote pour distribuer la peinture du réservoir aux gicleurs, et
- une unité de commande électronique (ECU) (7) connectée au moteur, au système de direction du VPA, au deuxième module GPS (33) et au circuit hydraulique (40), et
- un récepteur (70) connecté à l'ECU (7) du VPA et couplé à l'émetteur (60) de l'unité de commande du véhicule pilote pour recevoir les données de l'émetteur (60) de l'unité de commande du véhicule pilote ; ledit système (1) comprenant également :
- un troisième module GPS (8) destiné à être disposé sur une position fixe à proximité ou sur la chaussée où le marquage de la route est nécessaire ; et
- un émetteur (80) du type sans fil connecté au dit troisième module GPS (8) et couplé à ladite unité de commande (6) du véhicule pilote et à ladite unité de commande électronique (ECU) du VPA pour transmettre à l'unité de commande (6) du véhicule pilote et à l'ECU du VPA des données indicatives de la position fixe sur laquelle le troisième module GPS est disposé.

2. Système (1) selon la revendication 1, où ledit système (1) comprend également :
- un conduit flexible (4) qui met en communication le réservoir (25) du véhicule pilote avec le circuit hydraulique (40) du VPA, et
- un joint de raccordement (9) relié à une partie postérieure du véhicule pilote (2) et à une partie antérieure du VPA (3).

3. Système (1) selon la revendication 1 ou 2, où ledit VPA (3) comprend :
- un rail de guidage (36),
- au moins un chariot (35) soutenant lesdits gicleurs (34a, 34b) ; ledit chariot (35) étant monté coulissant dans ledit rail de guidage (36), et
- des actionneurs aptes à déplacer le chariot (35) le long du rail de guidage (36), lesdits actionneurs étant branchés et commandés par ladite ECU (7) du VPA.

4. Système (1) selon l'une quelconque des revendications précédentes, où ledit VPA (3) comprend des capteurs optiques (38a, 38b) orientés vers la surface routière (5) de la chaussée pour détecter la présence de marquages routiers préexistants ; lesdits capteurs optiques (38a, 38b) étant branchés à l'ECU du VPA.

5. Système (1) selon l'une quelconque des revendications précédentes, où ledit VPA (3) comprend des capteurs de proximité (39a, 39b) orientés vers la surface routière (5) de la chaussée pour détecter la présence d'obstacles sur la surface routière ; lesdits capteurs de proximité (39a, 39b) étant branchés à l'ECU du VPA.

6. Système (1) selon la revendication 4 ou 5, où ledit VPA (3) comprend deux bras de support (37a, 37b) qui débordent latéralement vers la droite et vers la gauche depuis une partie antérieure du VPA pour soutenir lesdits capteurs optiques (38a, 38b) et/ou lesdits capteurs de proximité (39a, 39b).

7. Système (1) selon l'une quelconque des revendications précédentes, où ladite unité de commande (6) du véhicule pilote contient un logiciel de cartographie apte à réaliser une cartographie de la surface routière en fonction des images filmées par lesdites caméras (24a, 24b) et des données de position détectées par ledit premier module GPS (23) disposé dans le véhicule pilote et par le troisième module GPS (8) disposé sur une position fixe à proximité ou sur la surface routière.

8. Méthode de marquage des routes horizontal automatique retroréfléchissant, avec un système (1) selon l'une quelconque des revendications précédentes ; comprenant les phases suivantes :
- disposition du troisième module GPS (8) sur une position fixe à proximité ou sur la surface routière sur laquelle on veut réaliser le marquage routier ;
- cartographie d'un segment de la chaussée moyennant ledit véhicule pilote et enregistrement des données de cartographie dans ladite unité de commande (6) du véhicule pilote,
- transfert des données de cartographie depuis l'unité de commande (6) du véhicule pilote à l'ECU (7) du VPA,
- déplacement du VPA sur une position sur laquelle le marquage routier doit être réalisé et pulvérisation de peinture moyennant les gicleurs (34a, 34b) du VPA sur la position sur laquelle le marquage routier doit être réalisé.
